# EUROPEAN PATENT APPLICATION

(11) **EP 2 804 044 A1**
(43) Date of publication of application: **19.11.2014**
(21) Application number: 14164395.7
(22) Date of filing: 11.04.2014
(51) Int. Cl.: G02F 1/1333, G02F 1/1335

(54) **Display device with integral metal frame**

(30) Priority: 17.05.2013 JP 2013105495
(71) Applicant: Funai Electric Co., Ltd., Nakagaito Daito-shi Osaka 574-0013 (JP)
(72) Inventor: Mori, Yasuhiro, Daito-shi, Osaka 574-0013 (JP); Yokawa, Akira, Daito-shi, Osaka 574-0013 (JP); Fukumoto, Yasuyuki, Daito-shi, Osaka 574-0013 (JP); Fujikawa, Akihiro, Daito-shi, Osaka 574-0013 (JP); Kobayashi, Masayoshi, Daito-shi, Osaka 574-0013 (JP)
(74) Representative: Global IP Europe Patentanwaltskanzlei

(57) **Abstract**

A display device (1) includes a display panel (12), a front face housing (11), a flat optical member (14, an integral metal frame (13), and a rear face housing (17). The display panel is configured to display image. The front face housing (11) covers a peripheral edge of the display panel (12) from a front side of the display device. The optical member (14) is disposed opposite a rear face of the display panel (12). The metal frame (13) is disposed between the peripheral edge of the display panel (12) and a peripheral edge of the optical member (14). The metal frame (13) is fastened to the front face housing (11). The rear face housing (17) is attached to the front face housing (11) to define a rear face of the display device.

## Description

### CROSS-REFERENCE TO RELATED APPLICATIONS

This application claims priority to Japanese Patent Application No. 2013-105495 filed on May 17, 2013. The entire disclosure of Japanese Patent Application No. 2013-105495 is hereby incorporated herein by reference.

### BACKGROUND

### Field of the Invention

The present invention generally relates to a display device. More specifically, the present invention relates to a display device for displaying images.

### Background Information

Flat-screen display devices such as liquid crystal television sets have become popular. With a conventional display device, main parts, such as a display panel, an optical member, a heat sink and a circuit board, are fixed in specific positions within a housing by using a number of support members. These support members help to raise the mechanical strength of the display device. Specifically, a conventional display device includes a cell guide and a bezel as support members (see Japanese Unexamined Patent Application Publication No. 2008-197167 (Patent Literature 1), for example).

### SUMMARY

Reducing the number of parts of support members in the conventional display device serves to afford greater design latitude and to lower the assembly cost of the display device. On the other hand, it can also lead to diminishing the mechanical strength of the display device.

One aspect is to provide a display device with a proper mechanical strength using fewer support members.

In view of the state of the known technology, a display device is provided that includes a display panel, a front face housing, a flat optical member, an integral metal frame, and a rear face housing. The display panel is configured to display image. The front face housing covers a peripheral edge of the display panel from a front side of the display device. The optical member is disposed opposite a rear face of the display panel. The metal frame is disposed between the peripheral edge of the display panel and a peripheral edge of the optical member. The metal frame is fastened to the front face housing. The rear face housing is attached to the front face housing to define a rear face of the display device.

Also other objects, features, aspects and advantages of the present disclosure will become apparent to those skilled in the art from the following detailed description, which, taken in conjunction with the annexed drawings, discloses one embodiment of the display device.

### BRIEF DESCRIPTION OF THE DRAWINGS

Referring now to the attached drawings which form a part of this original disclosure:
FIG. 1 is a perspective view of a display device in accordance with one embodiment;
FIG. 2 is an exploded perspective view of the main members of the display device;
FIG. 3 is a rear elevational view of the display device;
FIG. 4A is a partial cross sectional view of the main members of the display device;
FIG. 4B is a partial cross sectional view of the main members of a display device in accordance with a modified example;
FIG. 5 is a partial cross sectional view of the main members of the display device;
FIG. 6 is a partial cross sectional view of the main members of the display device;
FIG. 7 is a partial cross sectional view of the main members of the display device;
FIG. 8 is a cross sectional view of the display device; and
FIG. 9 is a cross sectional view of a display device in accordance with a comparative example.

### DETAILED DESCRIPTION OF EMBODIMENTS

A selected embodiment will now be explained with reference to the drawings. It will be apparent to those skilled in the art from this disclosure that the following descriptions of the embodiment are provided for illustration only and not for the purpose of limiting the invention as defined by the appended claims and their equivalents. Specifically, the numerical values, shapes, materials, constituent elements, layout and connection mode of the constituent elements, and so forth mentioned in the following embodiment are provided for illustration only and not for the purpose of limiting the invention. Of the constituent elements in the following embodiment, those not discussed in an independent claim will be described as optional constituent elements.

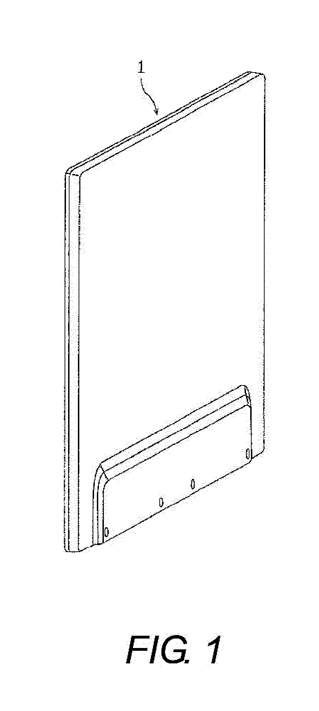

Referring initially to FIG. 1, a display device 1 is illustrated in accordance with one embodiment. FIG. 1 is a perspective view of the display device 1, illustrating the rear face of the display device 1 as seen diagonally from the rear. The display device 1 is a flat-screen display device, and can be a liquid crystal display device, for example.

In the following description, the face of the display device 1 on which images are displayed (that is, the side facing the user) will be called the front face, and the face on the opposite side will be called the rear face. Similarly, the front and back sides of the flat members that make up the display device 1 will also be called the front and rear faces.

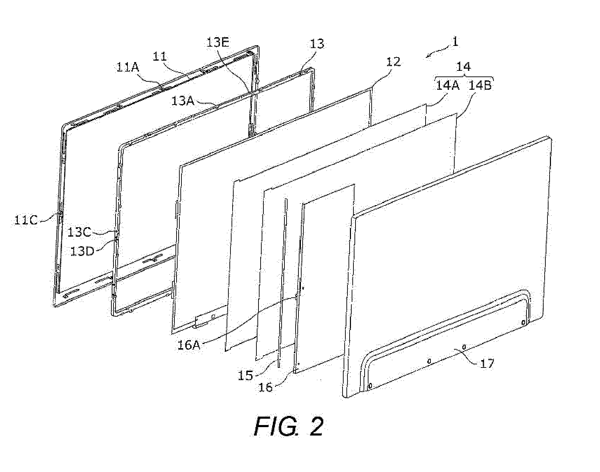

FIG. 2 is an exploded perspective view of the main members that make up the display device 1. In FIG. 2, several members that make up the display device 1 are shown as seen from the same direction as in FIG. 1.

In the description of this embodiment, details of the display device 1 not directly related to the present invention, such as the feet of the display device 1, can be omitted for the sake of brevity.

As shown in FIG. 2, the display device 1 includes a front face housing 11, a display panel 12, a metal frame 13, an optical member 14, a light source 15, a heat sink 16, and a rear face housing 17. The display device 1 can further includes a circuit board and wiring (not shown).

The front face housing 11 is the outer shell that covers just the peripheral edge of the front face of the display device 1, and is a member called a front cabinet, for example. The front face housing 11 can be a plastic frame. Hole components 11A and 11C for fastening the front face housing 11 and the metal frame 13 together are provided to the front face housing 11.

The display panel 12 is a display panel capable of displaying images, and can be a liquid crystal display panel, for example.

The metal frame 13 is an integral metal member disposed between the peripheral edge of the display panel 12 and the peripheral edge of the optical member 14. The metal frame 13 is provided with hole components 13A and 13C for fastening the metal frame 13 and the front face housing 11 together, with a hole component 13D for fastening the metal frame 13 and the heat sink 16 together, and with a hold-down component 13E that limits movement of the optical member 14 in the planar direction. The metal frame 13 can be configured such that a plurality of metal blanks are integrated by laser welding and are stamped. This stamping can include drawing or lifting in order to form the hole components 13A, 13C, and 13D. The metal frame 13 is integrated as a one-piece member. Also, the metal frame 13 can be integrated as a one-piece, unitary member.

The optical member 14 receives light emitted from the light source 15, and emits this received light in-plane at a substantially consistent intensity from the front face. The optical member 14 includes a light guide plate 14A and a reflecting sheet 14B, for example. The optical member 14 can further have a diffusing sheet or other such members (not shown).

The light source 15 is a light emitting body that emits light for illuminating the display panel 12 via the optical member 14, and includes a plurality of LEDs (light emitting diodes), for example. In FIG. 2, the light source 15 is illustrated as a side-light type. However, this is just an example. The light source 15 can instead be a back-light type.

The heat sink 16 is a heat dissipater that is connected to the light source 15 and diffuses the heat generated by the light source 15. The heat sink 16 is provided with a hole component 16A for fastening the heat sink 16 and the metal frame 13 together. The heat sink 16 can be produced by stamping sheet metal, for example. This stamping can include drawing or lifting in order to form the hole component 16A.

The rear face housing 17 is the outer shell that covers the rear face of the display device 1, and is a member called a rear cabinet, for example. The rear face housing 17 does not necessarily have to be integral, and can, for example, have a structure in which the entire rear face of the display device 1 is covered by a plurality of separated trim pieces called a rear frame and a rear cover. The rear face housing can be made of plastic, for example.

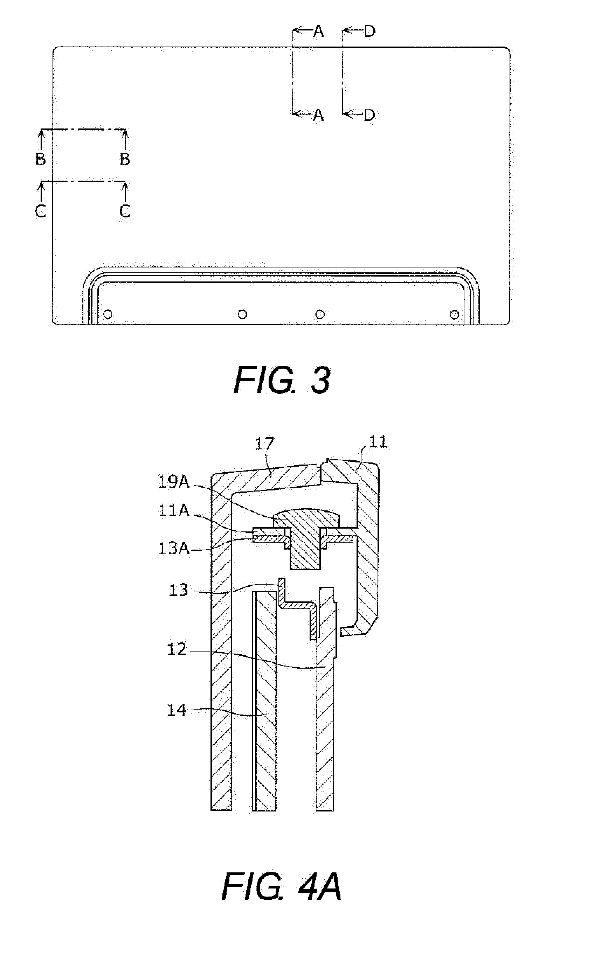

The structure for fastening the above-mentioned members together will now be described through reference to FIGS. 3 to 7.

FIG. 3 is a rear elevational view of the display device 1.

FIG. 4A is a partial cross sectional view of the display device 1 taken along A-A line in FIG. 3, as seen in the arrow direction.

As shown in FIG. 4A, the front face housing 11, the display panel 12, and the metal frame 13 are disposed in that order in the display device 1. The hole component 11A in the front face housing 11 and the hole component 13A in the metal frame 13 are fastened together by a screw 19A or another such member, for example.

In the example in FIG. 4A, the hole component 11A is an unloaded hole (e.g., a second through hole) provided to the front face housing 11 by plastic molding, and the hole component 13A is a threaded hole (e.g., a second threaded hole) that mates with a screw 19A and is provided to the metal frame 13 by burring or tapping. The metal frame 13 and the hole component 13A are linked in a cross section not shown in FIG. 4A.

The optical member 14 and the rear face housing 17 are disposed to the rear of the metal frame 13. The metal frame 13 hits the peripheral edge of the rear face of the display panel 12 and the peripheral edge of the front face of the optical member 14, which positions the optical member 14 perpendicular to the plane.

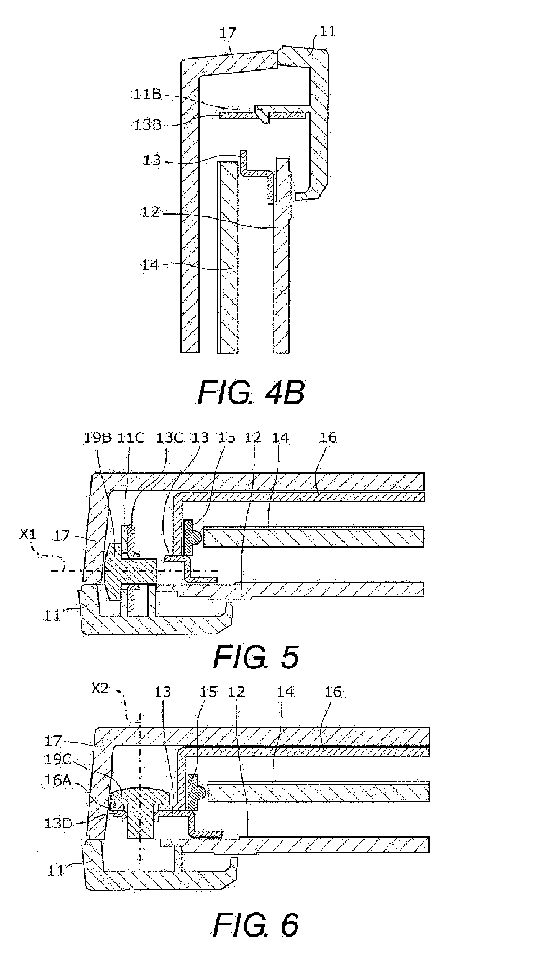

FIG. 4B is a partial cross sectional view of a display device in accordance with a modified example of the display device 1, taken along A-A line in FIG. 3, as seen in the arrow direction.

In FIG. 4B, the member that fastens the front face housing 11 and the metal frame 13 together is changed from the screw 19A in FIG. 4A to a plastic hook 11B.

In the example in FIG. 4B, the plastic hook 11B is a flexible portion of the front face housing 11 molded from plastic, and a hole with which the plastic hook 11B is engaged is provided to the hole component 13B. The metal frame 13 and the hole component 13B are linked in a cross section not shown in FIG. 4B.

Thus, the front face housing 11 and the metal frame 13 are fastened together at the top side of the display device 1. Furthermore, the front face housing 11 and the metal frame 13 are fastened together at the bottom side of the display device 1, just as at the top side.

FIG. 5 is a partial cross sectional view of the display device 1, taken along B-B line in FIG. 3, as seen in the arrow direction.

As shown in FIG. 5, the front face housing 11, the display panel 12, and the metal frame 13 are disposed in that order in the display device 1. The hole component 11C of the front face housing 11 and the hole component 13C of the metal frame 13 are fastened together by a screw 19B or another such member, for example.

In the example in FIG. 5, the hole component 11C is an unloaded hole (e.g., a third through hole) provided to the front face housing 11 by plastic molding, and the hole component 13A is a threaded hole (e.g., a third threaded hole) that mates with a screw 19B and is provided to the metal frame 13 by burring or tapping. The metal frame 13 and the hole component 13C are linked in a cross section not shown in FIG. 5.

The optical member 14, the light source 15, the heat sink 16, and the rear face housing 17 are disposed to the rear of the metal frame 13.

FIG. 6 is a partial cross sectional view of the display device 1, taken along C-C line in FIG. 3, showing an example as seen in the arrow direction.

As shown in FIG. 6, the hole component 13D in the metal frame 13 and the hole component 16A in the heat sink 16 are fastened together by a screw 19C or another such member, for example.

In the example in FIG. 6, the hole component 16A is an unloaded hole (e.g., a first through hole) provided to the heat sink 16, and the hole component 13D is a threaded hole (e.g., a first threaded hole) that mates with a screw 19C and that is formed by burring or tapping on the metal frame 13. In the illustrated embodiment, the hole components 13C and 13D has center axes X1 and X2 that perpendicularly extend with respect to each other. More specifically, the hole component 13C has the center axis X1 that extends horizontally, while the hole component 13D has the center axis X2 that extends front-to-rear direction of the display device 1. The hole components 13C and 13D are arranged along the same side of the display device 1.

Thus, on the left side of the display device 1 in rear view, the front face housing 11 and the metal frame 13 are fastened together, and the metal frame 13 and the heat sink 16 are fastened together. Similarly, the front face housing 11 and the metal frame 13 can be fastened together on the right side of the display device 1. The display panel 12 is positioned by being sandwiched between the front face housing 11 and the metal frame 13.

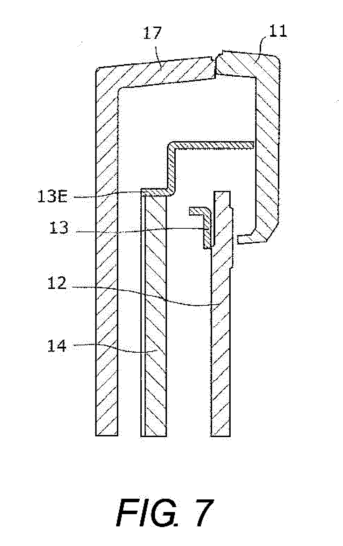

FIG. 7 is a partial cross sectional view of the display device 1, taken along D-D line in FIG. 3, showing an example as seen in the arrow direction.

As shown in FIG. 7, movement of the optical member 14 in the planar direction is limited when the end face (e.g., the side end face) of the optical member 14 contacts with the hold-down component 13E (e.g., the contact component) of the metal frame 13. The metal frame 13 and the hold-down component 13E are linked in a cross section not depicted in FIG. 7.

Thus, the optical member 14 and the metal frame 13 contact with each other at the top side of the display device 1. Similarly, the optical member 14 and the metal frame 13 can contact with each other on the bottom, right, and left sides of the display device 1. The optical member 14 is positioned in the planar direction when the optical member 14 and the metal frame 13 contact with each other at the four sides of the display device 1.

The rear face housing 17 and the front face housing 11 are fastened together by using a suitable known structure. For example, the rear face housing 17 can be screwed to the front face housing 11, or it can be fastened with a plastic hook. A rib that rises up from the rear face housing 17 toward the front face can be provided as a hold-down component to the rear face housing 17. The optical member 14 is positioned in a direction perpendicular to the plane when the optical member 14 is sandwiched between this hold-down component and the metal frame 13.

With the above structure, the front face housing 11, the display panel 12, the metal frame 13, the optical member 14, the light source 15, the heat sink 16, and the rear face housing 17 are each fixed in their respective positions in the display device 1. Also, the integral metal frame 13, which is very stiff and is disposed between the peripheral edge of the display panel 12 and the peripheral edge of the optical member 14 is used as a support member. Thus, good mechanical strength can be ensured for the display device 1 without providing any other support members.

The effect obtained with the above structure will be described through contrast with a comparative example.

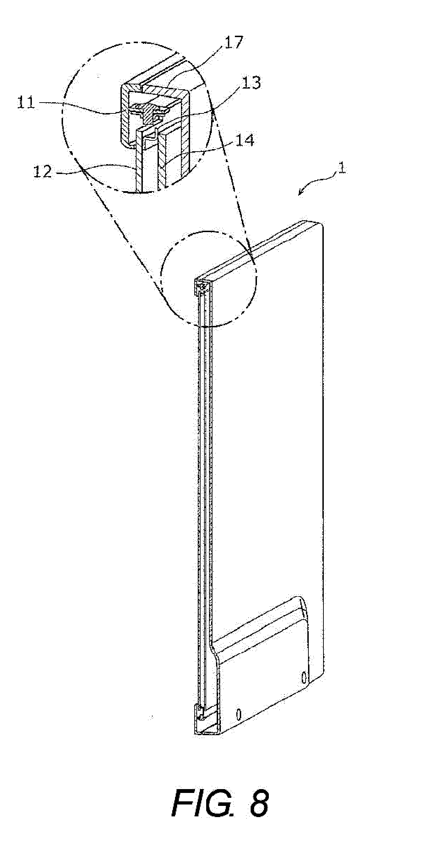

FIG. 8 is a cross sectional view of the display device 1, and includes a detail view of the main components within the circle. FIG. 8 shows the cross sectional structure of the same portion of the display device 1 as in FIG. 4A.

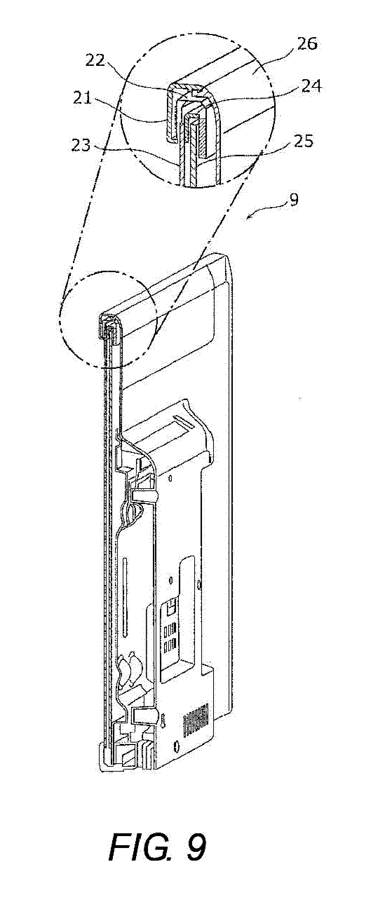

As is clear from FIG. 8 and the above description, the metal frame 13 is the only support member used in the display device 1. On the other hand, as shown in FIG. 9, a display device 9 in accordance with the comparative example is a backlit type of display device that makes use of two different support members including a bezel 22 and a cell guide 24. The display device 9 in accordance with the comparative example will be further described in detail, in which the bezel 22 and the cell guide 24 are used as the support members instead of the metal frame 13 of the display device 1.

FIG. 9 is a cross sectional view of the display device 9 in accordance with the comparative example, and includes a detail view of the main components within the circle. The display device 9 shown in FIG. 9 includes a front face housing 21, the bezel 22, a display panel 23, the cell guide 24, an optical member 25, and a rear face housing 26. The optical member 25 includes a diffusing plate and a diffusing sheet, for example.

The cell guide 24 is a rectangular frame that holds down the optical member 25. The display panel 23 is disposed on the front face of the cell guide 24, and the four sides of the display panel 23 are supported by the cell guide 24. The bezel 22 is a metal frame that holds down and fixes the display panel 23 and the cell guide 24.

It can be seen from FIGS. 8 and 9 that the display device 1 in this embodiment has an advantage in the following respects to the display device 9 in the comparative example.

As shown in FIG. 9, with the display device 9, the display panel 23 and the optical member 25 are fixed between the metal bezel 22 and the plastic cell guide 24, which provides overall stiffness to the display device 9. Accordingly, if the bezel 22 is to be eliminated from the display device 9, then some kind of measure will be necessary to make up for the loss in stiffness of the display device 9. For example, a stronger material can be used for the front face housing 21, but a change in material such as this tends to drive up the cost.

In view of this, with the display device 1, the bezel 22 and the cell guide 24 are eliminated from the display device 9, and the metal frame 13 is used instead, which is an integral member having high stiffness. Thus, the optical member 14 is held down and, at the same time, the overall stiffness of the display device 1 is ensured. The metal frame 13 is, for example, a member produced by integrating a plurality of blanks by laser welding (e.g., tailored blanks). This ensures overall stiffness of the display device 1 and allows the number of parts to be reduced without a significant rise in cost.

With the display device 1, the bezel 22 of the display device 9 is eliminated, which affords greater latitude in the shape of the front face housing 11 of the display device 1. For instance, the width of the front face housing 11 can be reduced to give the display device 1 a slimmer border and improve the aesthetics of the display device 1.

Also, as shown in FIG. 4B, the number of screws that are used can be reduced by using a plastic hook to fastened together the front face housing 11 and the metal frame 13.

Also, as shown in FIG. 6, better heat dissipation can be anticipated when the metal frame 13 and the heat sink 16 are fastened together.

In the illustrated embodiment, a display device is described as a product in accordance with one aspect of the present invention. However, the present invention is not limited to or by this embodiment. The present invention can also be applied to various modifications.

The display device 1 in accordance with an aspect of the present invention can also be utilized, for example, as a liquid crystal television set or another such flat-screen display device.

In the illustrated embodiment, the display device includes a display panel, a front face housing, a flat optical member, an integral metal frame, and a rear face housing. The display panel is configured to display image. The front face housing covers a peripheral edge of the display panel from a front side of the display device. The optical member is disposed opposite a rear face of the display panel. The metal frame is disposed between the peripheral edge of the display panel and a peripheral edge of the optical member. The metal frame is fastened to the front face housing. The rear face housing is attached to the front face housing to define a rear face of the display device.

With this configuration, the integral metal frame having high stiffness is used as a support member. Thus, good mechanical strength can be ensured in the display device even though no other support member is provided. Accordingly, the display device does not require a plurality of support members, the plurality of support members can be replaced by the single metal frame, which has various benefits, namely, reducing the number of parts required and thereby lowering the cost, and also improving the aesthetics of the display device.

The display device can further includes a light source disposed to a side of or behind the optical member, and a heat sink thermally connected to the light source. The heat sink can be fastened to the metal frame.

With this configuration, better heat dissipation can be anticipated.

With the display device, the heat sink has a first through hole. The the metal frame has a first threaded hole at a location corresponding to the first through hole of the heat sink. The heat sink is fastened to the metal frame with a screw that is disposed through the first through hole of the heat sink and fastened to the first threaded hole of the metal frame.

Also, the metal frame can be configured such that a plurality of metal blanks are integrated by laser welding and are stamped.

With this configuration, the metal frame can be formed at a high yield from sheet metal.

With the display device, the metal frame is integrated as a one-piece member.

With the display device, the front face housing has a flexible plastic hook. The metal frame has a hole that is engaged with the plastic hook such that the front face housing and the metal frame can be fastened together.

With this configuration, since there is no need for screws to fasten the front face housing and the metal frame together, the number of screws that are used can be reduced.

With the display device, the front face housing has a second through hole. The metal frame has a second threaded hole at a location corresponding to the second through hole of the front face. The front face housing is fastened to the metal frame with a screw that is disposed through the second through hole of the front face housing and fastened to the second threaded hole of the metal frame.

With the display device, the front face housing has a third through hole. The metal frame has a third threaded hole at a location corresponding to the third through hole of the front face. The front face housing is fastened to the metal frame with a screw that is disposed through the third through hole of the front face housing and fastened to the third threaded hole of the metal frame. The first and third threaded holes of the metal frame having center axes, respectively. The center axes perpendicularly extend with respect to each other.

With the display device, the metal frame has a contact component that contacts with a side end face of the optical member.

With the display device, the integral metal frame having high stiffness is used as a support member. Thus, good mechanical strength can be ensured in the display device even though no other support member is provided. Accordingly, the plurality of support members can be replaced by a single integral metal frame, which has various benefits, namely, reducing the number of parts required and thereby lowering the cost, and also improving the aesthetics of the display device.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a display device in an upright position. Accordingly, these directional terms, as utilized to describe the display device should be interpreted relative to a display device in an upright position on a horizontal surface.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only a selected embodiment has been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiment according to the present invention are provided for illustration only, and not for the purpose of limiting the invention as defined by the appended claims and their equivalents.

## Claims

1. A display device comprising:
a display panel configured to display image;
a front face housing covering a peripheral edge of the display panel from a front side of the display device;
a flat optical member disposed opposite a rear face of the display panel;
an integral metal frame disposed between the peripheral edge of the display panel and a peripheral edge of the optical member, the metal frame being fastened to the front face housing; and
a rear face housing attached to the front face housing to define a rear face of the display device.

2. The display device according to claim 1, further comprising
a light source disposed to a side of or behind the optical member; and
a heat sink thermally connected to the light source, the heat sink being fastened to the metal frame.

3. The display device according to claim 2, wherein
the heat sink has a first through hole,
the metal frame has a first threaded hole at a location corresponding to the first through hole of the heat sink, and
the heat sink is fastened to the metal frame with a screw that is disposed through the first through hole of the heat sink and fastened to the first threaded hole of the metal frame.

4. The display device according to any one of claims 1 to 3, wherein
the metal frame is configured such that a plurality of metal blanks are integrated by laser welding and are stamped.

5. The display device according to any one of claims 1 to 4, wherein
the metal frame is integrated as a one-piece member.

6. The display device according to any one of claims 1 to 5, wherein
the front face housing has a flexible plastic hook,
the metal frame has a hole that is engaged with the plastic hook such that the front face housing and the metal frame are fastened together.

7. The display device according to any one of claims 1 to 5, wherein
the front face housing has a second through hole,
the metal frame has a second threaded hole at a location corresponding to the second through hole of the front face, and
the front face housing is fastened to the metal frame with a screw that is disposed through the second through hole of the front face housing and fastened to the second threaded hole of the metal frame.

8. The display device according to any one of claims 1 to 7, wherein
the front face housing has a third through hole,
the metal frame has a third threaded hole at a location corresponding to the third through hole of the front face,
the front face housing is fastened to the metal frame with a screw that is disposed through the third through hole of the front face housing and fastened to the third threaded hole of the metal frame, and
the first and third threaded holes of the metal frame having center axes, respectively, the center axes perpendicularly extending with respect to each other.

9. The display device according to any one of claims 1 to 8, wherein
the metal frame has a contact component that contacts with a side end face of the optical member.
